# FASCICULE DE BREVET EUROPEEN

(11) **EP 1 531 979 B1**
(45) Date de publication et mention de la délivrance du brevet: **25.08.2010**
(21) Numéro de dépôt: 03729773.6
(22) Date de dépôt: 25.06.2003
(51) Int. Cl.: B29C 51/28, B29C 51/14, B29C 70/44

(54) **PROCEDE DE FABRICATION D'UNE TOILE FORMEE ET RENFORCEE, TOILE ET DISPOSITIF POUR SA FABRICATION**
VERFAHREN ZUR HERSTELLUNG EINES GEFORMTEN UND VERSTÄRKTEN TUCHS, TUCH SOWIE VORRICHTUNG ZUM HERSTELLEN DESSELBEN
METHOD OF PRODUCING A REINFORCED AND SHAPED CLOTH, CLOTH AND APPARATUS FOR MANUFACTURING SAME

(30) Priorité: 02.07.2002 CH 115002
(43) Date de publication de la demande: 25.05.2005
(60) Demande divisionnaire: 09176973.7
(73) Titulaire: Createx S.A., 1110 Morges (CH)
(72) Inventeur: GAUTIER, Gérard, 1137 Yens (CH); KESSI, Edouard, 1162 St-Prex (CH)
(74) Mandataire: Ganguillet, Cyril
(86) Numéro de dépôt international: PCT/CH2003/000415
(87) Numéro de publication internationale: WO 2004/005009

(56) Documents cités:
- US-A- 6 106 649

## Description

La présente invention se rapporte à un procédé de fabrication de toiles formées et renforcées, et plus particulièrement à un procédé de fabrication de toiles formées et renforcées en continu alterné, la toile étant constituée par des éléments composites qui sont constitués par une membrane, étanche par exemple, qui enrobe des éléments de renforcement, des fils par exemple, les éléments constituant la toile pouvant être formés en trois dimensions de manière à ce que la toile présente une forme désirée en trois dimensions.

Les toiles renforcées et formées sont utilisées dans tous les cas où une toile doit être renforcée d'une manière générale et en particulier lorsqu'une toile doit être renforcée selon des directions particulières qui sont déterminées par les efforts qui agissent sur la toile. A titre d'exemple lorsqu'une toile fortement sollicitée par des efforts comporte des oeillets de fixation à l'endroit de ses angles ou ailleurs, des renforcements peuvent être nécessaires pour diffuser les efforts, maintenir la forme et éviter des déchirures. De plus, si des efforts importants agissent entre l'un ou l'autre des oeillets des renforcements peuvent être nécessaires dans la direction des efforts.

Dans de nombreux cas, il est nécessaire que la toile présente des formes particulières en trois dimensions que ce soit pour des raisons de performances ou pour des raisons esthétiques.

La fabrication de toiles de haute performance, renforcées et formées est soumise à plusieurs paramètres dont bien entendu les critères commerciaux qui impliquent qu'une toile doit être performante, aussi légère que possible et bien entendu d'un prix aussi bas que possible.

De nombreuses formes d'exécution de toiles renforcées et formées et de fabrication de toiles renforcées et formées sont connues mais elles présentent toutes de nombreux inconvénients.

Un inconvénient essentiel de toutes les toiles renforcées et formées de haute performance connues est que la structure de la toile est constituée par un assemblage d'éléments du type sandwich, c'est-à-dire que la toile est constituée au minimum de trois composants qui sont les éléments de renforcement qui sont assemblés par collage en sandwich entre deux feuilles de plastique polymérisé, par exemple. Ce type de construction de toile est coûteux et d'un poids assez élevé. Les feuilles de plastique polymérisé sont semi-rigides et ne peuvent pas permettre des déformations locales- La forme d'ensemble de la toile doit permettre d'obtenir une forme voulue sur l'ensemble de la dimension de la toile ce qui nécessite par conséquent des moules à la dimension totale de la voile qui sont très coûteux. Ces procédés de fabrication avec moules à dimension globale présente plusieurs inconvénients dont un des plus importants est le coût qui se reporte inévitablement sur le produit fini. Un autre inconvénient est l'encombrement de ces moules qui nécessitent de très grands locaux de production. De plus, le coût important des outillages implique un manque de flexibilité lorsque des changements de formes sont nécessaires ce qui retarde et rend les phases de développement très coûteuses. Les fils de renforcement étant généralement posés chacuns d'une seule pièce avec ces formes d'exécution, le positionnement est très délicat.

Le document US 6,106,649 divulgue un procédé de préparation d'une voile tridimensinnelle selon le préamble des revendications 1, 12 et 16 en utilisant plusieurs couches, notamment une première couche constituée par un film et une deuxième couche sur la base d'un adhésif, ainsi que des fils de renforcement.

D'autres formes d'exécution connues sont réalisées par l'assemblage de plusieurs panneaux de toile de découpes différentes, les panneaux étant assemblés entre eux par des coûtures ou par collage. L'endroit des coûtures est fragile et nécessite des panneaux de renforcement eux-mêmes rapportés par des coutures. Les efforts soumis à la toile sont donc dépendants de la résistance des coûtures à ces endroits ce qui, comme dit, présente l'inconvénient de nécessiter des panneaux de renforcement qui contribuent à augmenter le poids d'ensemble de la toile. De plus, aux endroits des coûtures et des panneaux de renforcement la toile est moins souple que les autres panneaux de la toile, ce qui provoque de nombreuses plissures et de la fatigue des matériaux lorsque la toile prend la forme voulue ce qui est inesthétique et ce qui peut réduire les performances de la toile pour certaines formes d'utilisation.

Les buts de la présente invention consistent donc à remédier aux inconvénients précités des formes d'exécution connues.

Les buts sont atteints selon les principes de l'invention tels que décrits dans la revendication 1.

Le procédé de fabrication de toiles formées et renforcées, selon les principes de l'invention, consiste à procéder à la fabrication de la toile en continu. Une presse de faible largeur par rapport à la longueur de la toile presse successivement les éléments constituants de la toile. Des éléments de renforcement, des fils par exemple, sont préparés sur un tapis qui est disposé déplaçable sur une table de préparation et des éléments de renforcement discontinus sont disposés en chevauchant la partie en attente de la toile déjà pressée. Les éléments de renforcement peuvent ainsi être disposés dans toutes les directions selon la direction et l'importance des efforts qui sont soumis à la toile. Les cuves supérieure et inférieure de la presse comportent des dispositifs déplaçables et réglables qui permettent de procurer lors du pressage une forme en trois dimensions voulue à des endroits voulus. Par avancements successifs de la toile et selon les réglages la toile peut présenter des portions plates ou présenter des portions en trois dimensions, la forme des portions en trois dimensions peut être variée rapidement selon la forme finale prévue pour la toile. Les éléments qui constituent la toile sont composés de fils qui sont enrobés d'une membrane qui est constituée par de la résine. Ces éléments se présentent avant pressage sous formes de bandes qui peuvent être constitués par un préimprégné de résine et de fils, la préimprégnation présentant l'avantage de maintenir les fils. Une fois pressés la toile est constituée par la membrane qui est la résine qui enrobe les fils ou plutôt les filaments des fils. En effet les fils sont constitués par des milliers de filaments qui se répartissent sur la largeur de chaque bande. Lors de la préparation une partie de chaque bande est posée sur les bandes juxtaposées et lors du pressage les filaments des différentes bandes s'entremêlent entre eux de manière à constituer une toile homogène et étanche par exemple.

Les avantages des principes de l'invention sont nombreux. Un des avantages importants est que la toile une fois terminée est constituée, en coupe, par deux éléments qui sont la membrane et les filaments de renforcements, et en conséquence le procédé de fabrication permet de réduire les éléments en comparaison avec les formes d'exécutions connues à trois couches. Cette réduction du nombre d'éléments permet d'obtenir une réduction du poids et du coût.

Le fait que la toile terminée se présente sous forme d'une membrane enrobant des milliers de filaments entremêlés permet d'obtenir une toile très homogène, sans plissure et avec des renforcements qui permettent de résister à tous les efforts qui peuvent être soumis à la toile. La membrane et les filaments présentent encore l'avantage d'être pratiquement indéformables dans le sens des efforts tout en étant très souples lors du pliage de la toile par exemple.

La presse présente un très faible encombrement par rapport aux dimensions de toiles à fabriquer ce qui permet de l'installer dans des locaux de faibles dimensions.

Le dispositif de formage intégré à la presse qui permet d'obtenir des portions de toile en trois dimensions, ce qui permet d'obtenir une toile finie en trois dimensions, présente de nombreux avantages. Un de ces avantages est que le dispositif de formage permet de supprimer les outillages coûteux tels que les moules ou outillages à trois dimensions. En effet, le dispositif de formage peut permettre d'obtenir une multitude de formes différentes par de simples et très rapides réglages. Cet avantage est très important lors de la fabrication mais il est aussi très important lors du développement de nouvelles toiles présentant de nouvelles formes, le dispositif de réglage permettant d'obtenir très rapidement une nouvelle forme par de simples et rapides règlages.

Les principes de l'invention permettent de réduire considérablement les coûts de fabrication tout en permettant d'obtenir des toiles plus performantes
Les figures annexées illustrent schématiquement et à titre d'exemple les principes de l'invention.
La figure 1 est une vue d'ensemble de côté de la presse et des différents éléments annexés à la presse.
La figure 2 est une vue de face de la presse avec le dispositif de formage.
La figure 3 est vue d'ensemble de côté de la presse avec le dispositif de formage en position de formage.
La figure 4 est une vue de face de la presse avec le dispositif de formage en position de formage.
La figure 5 est une vue de la presse avec un disposif de chauffage à infra-rouge.
La figure 6 est une vue en coupe d'une membrane enrobant des fils disposés d'une manière uni-directionnelle.
La figure 7 est une vue en coupe d'une membrane enrobant des fils disposés d'une manière multi-directionnelle.
La figure 8 est une vue en plan de bandes avant pressage.
La figure 9 est en vue en plan d'une toile avec des bandes disposées en différentes directions.
La figure 10 est une vue en coupe de portions de toile formées en trois dimensions.
La figure 11 est une vue en coupe de côté d'une toile dépliée.

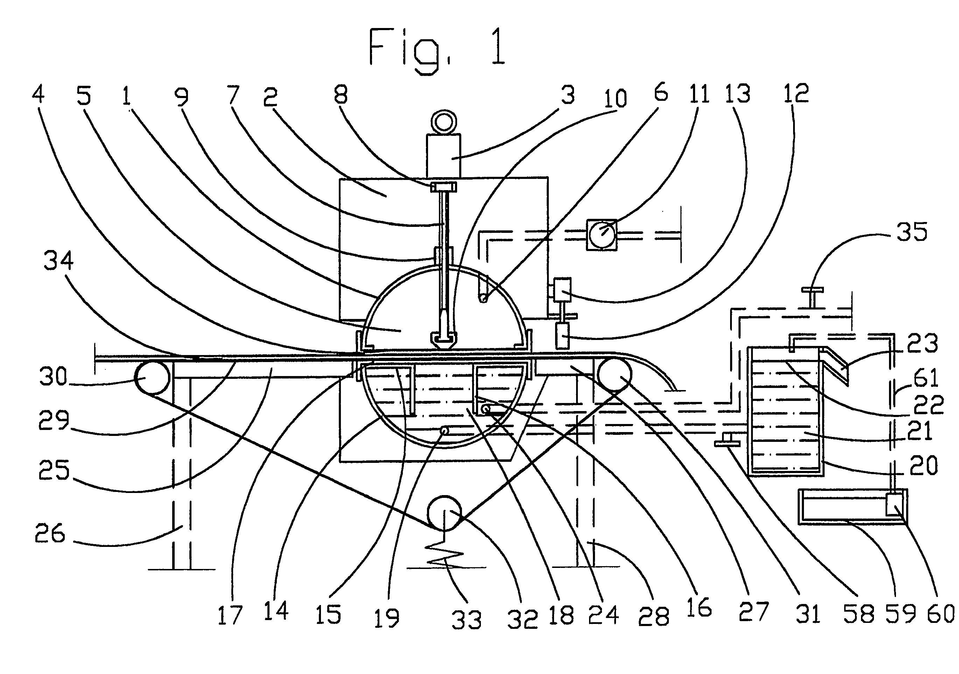

En référence tout d'abord à la figure 1, une presse est constituée par une cuve supérieure 1 et une cuve inférieure 14. La cuve inférieure 14 comporte des cornières en forme de L 15 et 16. La partie supérieure de la cuve inférieure 14 comporte un élément souple 17 (une membrane en silicone par exemple) qui est monté d'une manière hermétique sur la cuve inférieure 14. La cuve inférieure 14 est remplie d'eau 18 qui est amenée par une entrée d'eau 24. L'entrée d'eau est contrôlée par une vanne 35. La cuve inférieure comporte une sortie d'eau 19 qui est une sortie d'équilibrage. La sortie d'eau 19 est reliée par un conduit à un réservoir 20 qui contient de l'eau 21. Le réservoir comporte un déversoir d'eau 23 qui détermine la hauteur du niveau d'eau 22. La hauteur du niveau d'eau 22 est prévu pour se trouver au niveau de la face inférieure de l'élément souple 17. Le niveau d'eau dans la cuve inférieure est ainsi contrôlé par le principe des vases communiquants. Une vanne 58 est montée entre la sortie d'eau 19 et le réservoir 20. La fermeture de la vanne 58 permet de bloquer le circulation d'eau et d'annuler le principe des vases communiquants. Un réservoir d'équilibrage 59 est placé sour le déversoir 23. Lorsque de l'eau se déverse par le déversoir 23 dans le réservoir d'équilibrage 59, le surplus d'eau dans le réservoir d'équilibrage est constamment ramené dans le réservoir 20 par un conduit 61 qui est relié à une pompe 60. La cuve supérieure 1 est fermée dans sa partie inférieure par un élément souple 4 qui est monté d'une manière hermétique à la cuve supérieure. La cuve supérieure contient de l'air 5 qui est amené par une entrée d'air 6. La pression de l'air est contrôlée par un manomètre 11. La cuve supérieure 1 comporte des éléments de renforcement 2. Une poutre métallique 3 est montée sur les éléments de renforcement, le tout étant assemblé par soudure par exemple. La poutre métallique 3 est reliée à un vérin ou à n'importe quel dispositif mécanique permettant d'une part de soulever la cuve lors des opérations de préparation ou d'appliquer une pression vers le bas lors de l'opération de pressage. Une tige filetée 7 qui comporte un écrou d'actionnement 8 coopère avec un élément taraudé 9 qui est montée sur la cuve supérieure. l'extrémité inférieure de la tige est reliée avec jeux à une latte de formage 10. Une table de préparation 25 est montée sur des pieds 26 et une table de réception 27 est montée sur des pieds 28. Une bande de transport 29 est montée déplaçable sur les tables et sur l'élément souple 17 de la cuve inférieure 14. La bande de transport est maintenue par deux rouleau fixes 30 et 31 et par un rouleau déplaçable 32 qui est soumis à l'action d'un ressort de traction 33 qui règle la tension de la bande de transport 29 en fonction des déformations de celle-ci. Les bandes renforcées 34 qui constituent la toile une fois les pressages effectués sont préparés sur la bande de transport, passent ensuite sous la presse et sortent sous forme d'une toile contituée par une membrane qui enrobe des filaments.

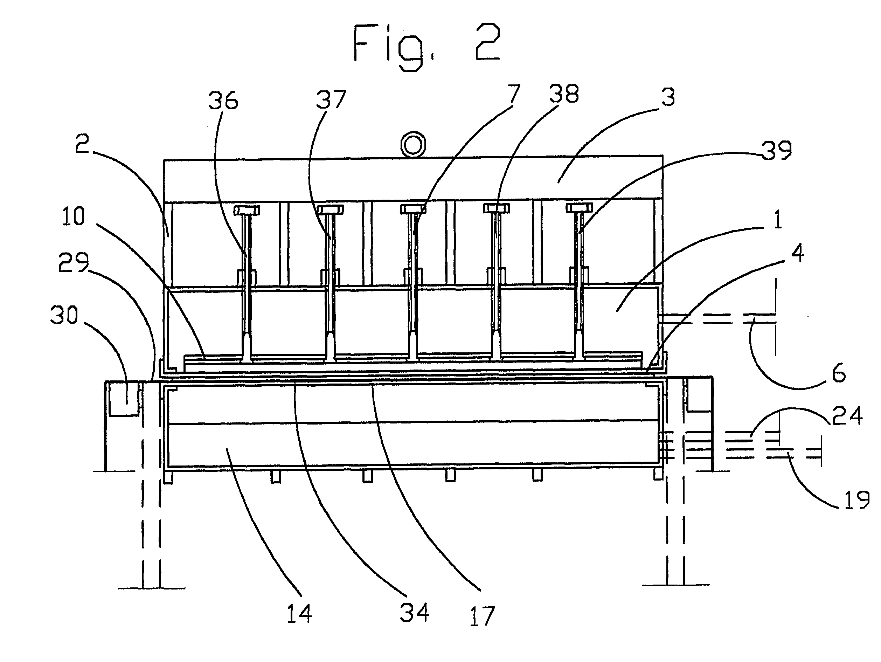

La figure 2 montre en vue de face les tiges filetées 36, 37, 7, 38, 39, qui sont reliées dans leur partie inférieure à la latte de formage 10. La latte de formage n'est pas fixée aux tiges dans sont sens longitudinal, mais elle est montée déplaçable de manière à ce que lorsque la latte de formage est déformée les tensions sur elle puissent être absorbées.La figure 2 montre la poutre métallique 3, la cuve supérieure 1 dans laquelle la latte de formage est installée et les éléments de renforcement 2 de la cuve supérieure, les éléments souples 4 et 17, l'entrée d'eau 24, la sortie d'eau 19 d'équilibrage, l'entrée d'air 6, la cuve inférieure 14, la bande de transport 29 et le rouleau 30 et les bandes renforcées 34.

La position montrée sur les figures 1 et 2 est la position de pressage à plat dans laquelle la latte de formage est en position non active. Dans cette position l'eau de la cuve inférieure est maintenue à niveau par le principe des vases communiquants et ensuite la vanne 58 est fermée, et l'air contenu dans la cuve supérieure est mis sous pression, à une valeur de pression qui est déterminée par la nature de la résine des bandes renforcées.

Lors du pressage la résine doit être chauffée ou activée à une température déterminée par la nature de la résine. Plusieurs possibilités de chauffage peuvent être prévus selon la figure 1. Une possibilité est le chauffage de l'air contenu dans la cuve supérieure. Une possibilité est le chauffage de l'eau contenue dans la cuve inférieure. Une possibilité est le chauffage de la table de préparation juste avant que les bandes renforcées soit déplacées sous la presse.

Pour le cas où le chauffage n'est pas obtenu par la table de préparation cette table est de toute manière chauffée à une certaine température nécessaire à une légère adhésion des bandes renforcées pour faciliter la pose de ces bandes.

La figure 1 montre un élément de blocage 12 qui est actionné par un vérin de blocage 13. Dans la position de déplacement de la bande de transport l'élément de blocage est inactif.

Dans la pratique les premières bandes renforcées sont disposées sur la table de préparation. Une fois la pose des bandes renforcées effectuée, la bande de transport place ces premières bandes renforcées sous la presse, la cuve supérieure est déplacée vers le base jusqu'à contact avec pression sur la cuve inférieure, par chauffage et par la pression d'air de la cuve supérieure les bandes renforcées se transforment en une membrane enrobant des filaments, le tout constituant une toile étanche ou non étanche. Une ou les deux cuves sont refroidies, refroidissant ainsi la membrane. Le déplacement des bandes renforcées par la bande de transport laisse une portion des bandes sur la table de préparation pour le raccordement avec la deuxième série de bandes renforcées. Lors du temps de pressage des premières bandes renforcées, les deuxièmes bandes sont disposées sur la table de préparation et lorsque l'opération de pressage des premières bandes renforcées est accompplie la pression d'air est remise à la pression ambiante, la cuve supérieure est soulevée et les deuxièmes bandes renforcées sont placées sous la presse. Le temps de fabrication d'une toile est déterminée par le temps nécessaire au chauffage des bandes renforcées et au refroidissement. A titre d'exemple, selon les résines utilisées le temps de pressage peut se limiter à quelques minutes qui sont de toute manière nécessaires pour la disposition des bandes de renforcement suivantes.

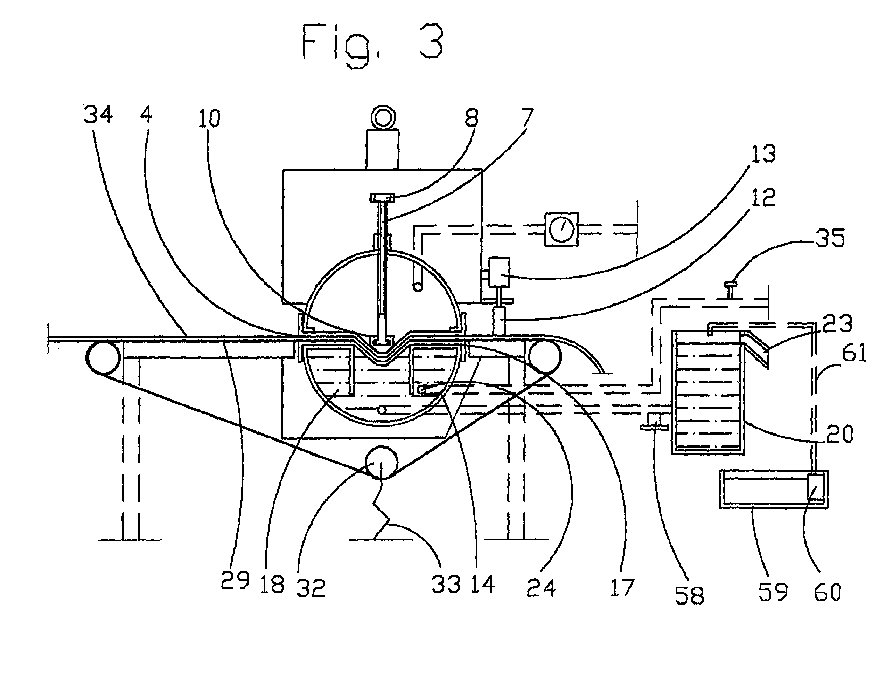

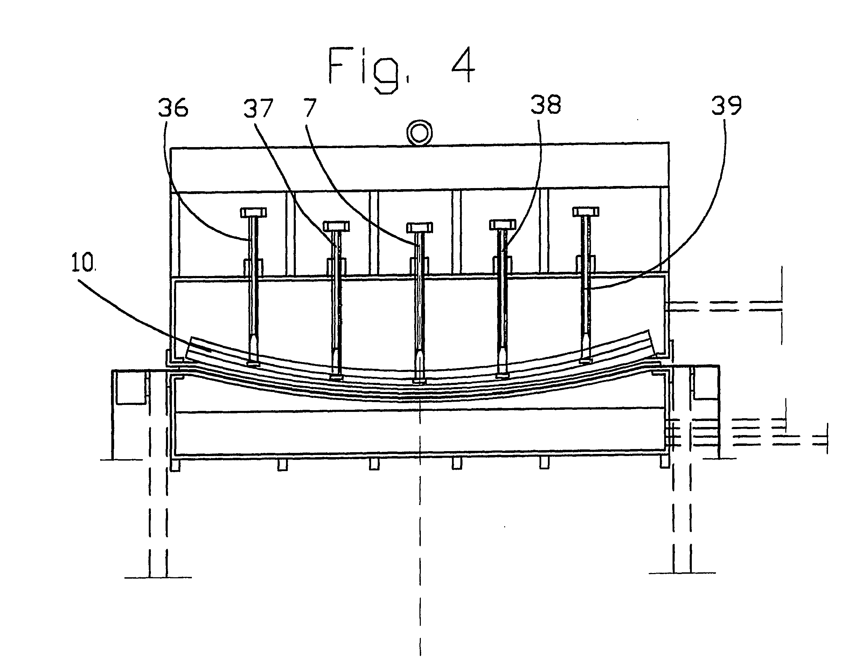

Les figures 3 et 4 montrent le pressage d'une portion de bandes renforcées avec formage en trois dimensions. Dans ce cas, lorsque les bandes renforcées 34 sont installées sous la presse les tiges 36, 37, 7, 38, 39, sont actionnées, par exemple avec l'aide d'écrous tel que l'écrou 8 de manière à donner une forme d'arc à la latte 10. L'élément de blocage 12 est actionné par le vérin de blocage 13 et bloque la portion de toile déjà terminée. De cette manière, les fils des bandes renforcées peuvent prendre la forme prévue, donc la différence de longueur résultant de la troisième dimension. Lors du pressage avec formage les éléments souples 4 et 17 et la bande transport 29 prennent également la forme choisie. Le rouleau déplaçable 32 se déplace vers le haut en maintenant la tension de la bande de transport par le ressort 33. La position de forme, donc le déplacement de la latte de formage 10 vers le bas réduit le volume de la cuve inférieure 14 et l'eau 18 en trop peut sortir par la sortie d'eau qui passe dans le réservoir 20 et qui se déverse par le déversoir 23. La vanne 58 est fermée bloquant la quantité d'eau dans la cuve 14, et l'air 5 est mis sous pression.

Lorsque le pressage est terminé, la latte de formage est replacée en position non active, la vanne 58 est ouverte, l'eau est remise à niveau par la pompe 60 qui ramène l'eau excédentaire contenue dans le réservoir d'équilibrage 59 jusque dans le réservoir 20 par le conduit 61 Les autres opérations de pressage sont identiques aux opérations de pressage à plat.

Dans la pratique et dans le but d'obtenir la forme voulue en trois dimensions de toile finie, des portions de la toile sont pressées à plat, d'autres avec diverses formes de la latte de formage.

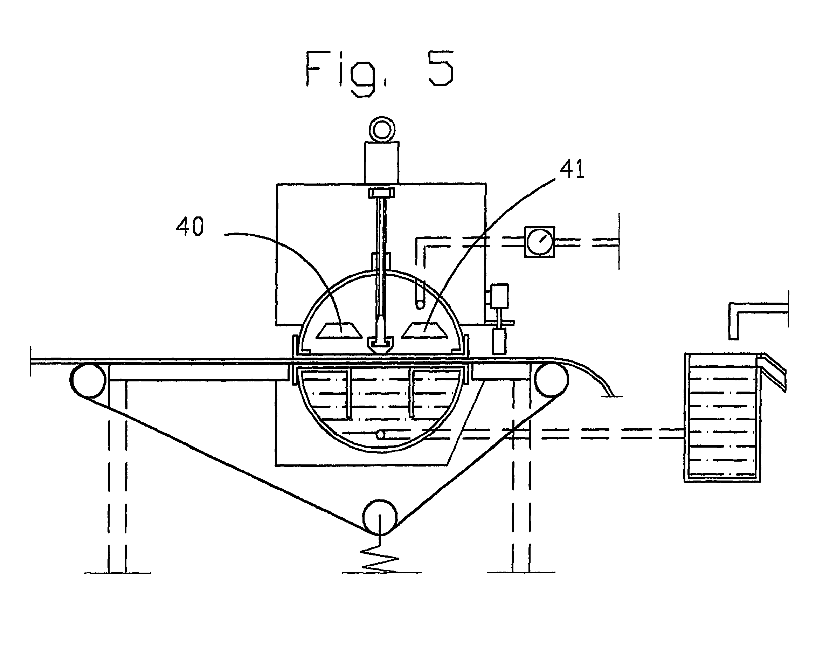

La figure 5 montre une autre possibilité de chauffage avec des éléments de chauffage à infra-rouge 40 et 41 qui sont disposés dans la cuve supérieure.

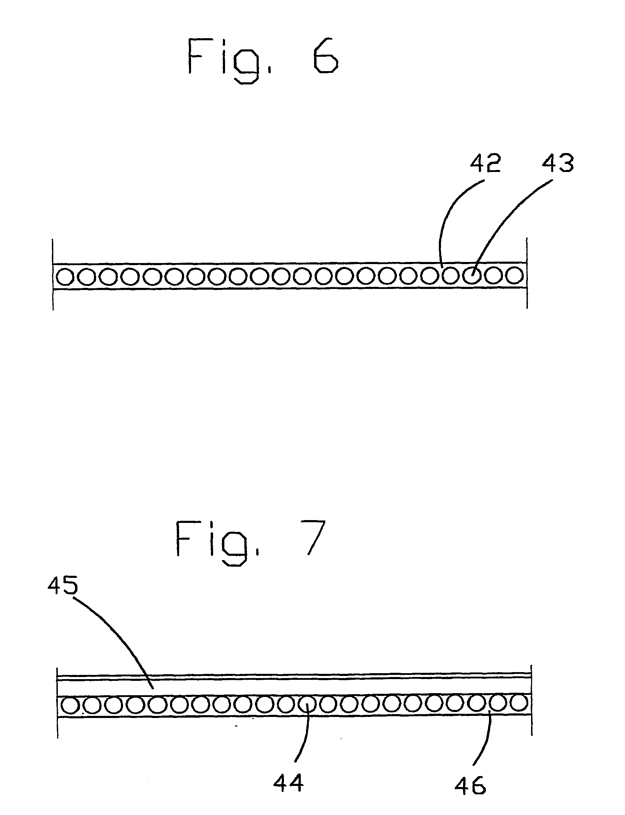

La figure 6 montre une portion de toile avec la membrane 42 qui enrobe les fils 43 disposés d'une manière uni-directionnelle.. Dans la pratique et après pressage, les fils sont en fait constitués par des milliers de filaments.

La figure 7 montre une portion de toile avec la membrane 46 enrobant des fils de chaines 44 et des fils de trames 45 d'une manière multi-directionnelle.

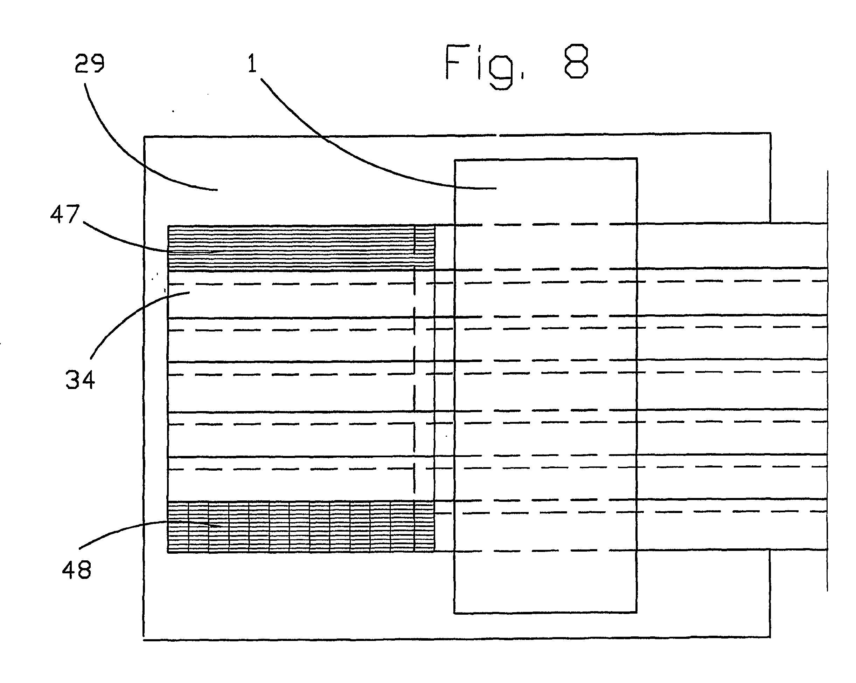

La figure 8 montre en vue en plan les bandes renforcées 34 qui sont disposées sur la bande de transport 29 qui est posée sur la table de préparation avec passage sous la presse représentée sur cette figure par la cuve supérieure 1. La figure 8 montre des différentes sortent de bandes renforcées 47 uni-directionnelle ou 48 bi-directionnelle qui peuvent être utilisées à titre d'exemple.

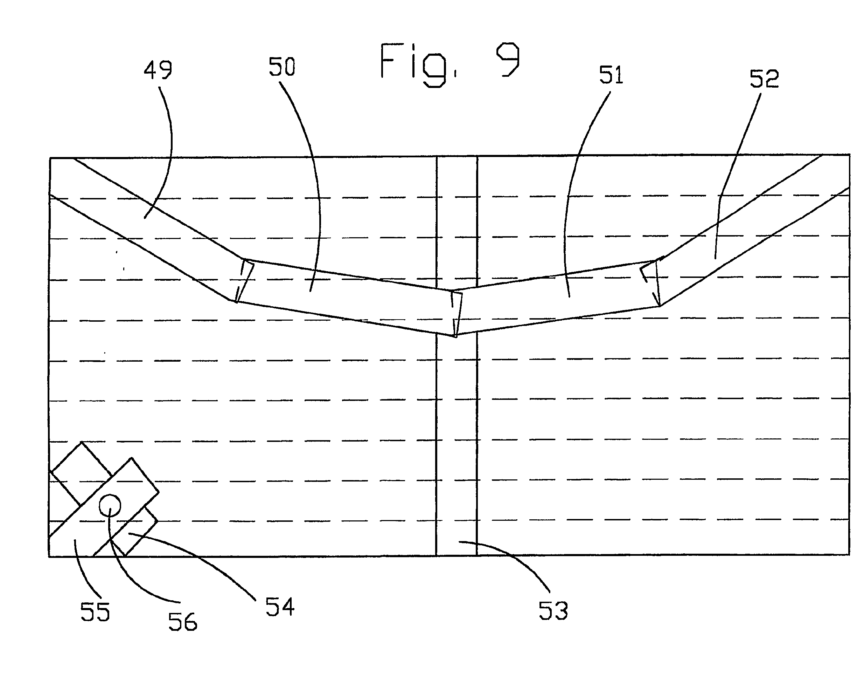

La figure 9 est une vue en plan d'une toile qui montre quelques exemples de possibilités de disposition de bandes renforcées, soit les bandes renforcées 49, 50, 51, 52, qui permettent d'obtenir une résistance selon un arc. La bande 53 qui présente un renforcement à 90°, ou des bandes 55 et 54 qui peuvent être disposées à l'endroit d'un oeillet 56 par exemple.

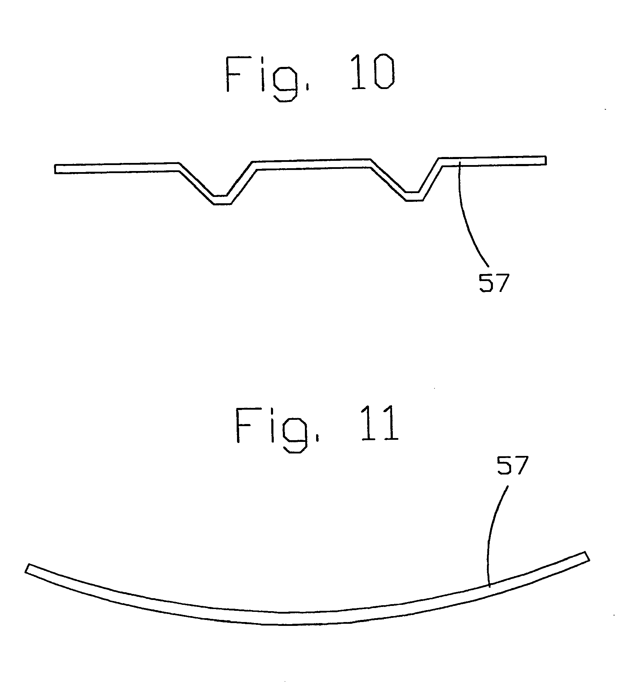

La figure 10 montre une vue en coupe d'une toile avec des portions déformées en trois dimensions selon la figure 4 en position non tenue.

La figure 11 montre la forme à trois dimensions que prend la toile lorsqu'elle est tendue.

Les différents éléments d'actionnement, les tiges filetées, les déplacements de la cuve supérieure, l'avance de la bande de transport, l'élément de blocage, l'ouverture et la fermeture de des amenées et sorties d'eau, l'enclenchement et le déclenchement du chauffage, la pression de l'air, peuvent être obtenus par des moteurs électriques, pas-à-pas par exemple, des vérins, des vannes ou des commandes électriques. Chacun de ces éléments peut être connecté à un ordinateur dont le programme gère l'actionnement. Il est également possible de disposer les bandes renforcées par un dispositif de transport et de placement qui peut également être géré par le programme informatique.

De cette manière, la fabrication de la toile peut être complètement automatique.

L'utilisation des toiles en trois dimensions est multiple, et ces toiles peuvent être utilisées dans tous les cas nécessitant des toiles légères, très résistantes et à trois dimensions.

## Revendications

1. Procédé de fabrication d'une toile formée et renforcée, comprenant des éléments de renforcement discontinus (34, 47-55) et une membrane (42, 46) qui enrobe lesdits éléments de renforcement, **caractérisé en ce que** la toile est réalisée en une pièce par pressage de portions successives, **en ce que** pour constituer des portions de la toile, une pluralité d'éléments sous forme de bandes (34, 47-55), comprenant les matériaux des éléments de renforcement et de la membrane, est agencée sur une bande de transport qui est posée sur une table de préparation (25), de telle façon que chaque élément sous forme de bandes se trouve en chevauchement partiel avec les éléments sous forme de bandes adjacents, et **en ce que** ladite pluralité d'éléments sous forme de bandes est amenée et pressée portion par portion dans une presse munie de moyens de pressage de forme réglable (7, 36-39), de manière à constituer à la sortie de la presse une toile qui comporte des portions plates et/ou des portions formées en trois dimensions selon la forme que présentent lesdits moyens de pressage lors du pressage de la portion correspondante.

2. Procédé selon la revendication 1, **caractérisé en ce que** lesdits éléments sous forme de bandes (34, 47-55) comprennent une pluralité de fils ou de filaments de renforcement (43-45), unidirectionnelles, imprégnés d'une résine (42, 46).

3. Procédé selon la revendication 2, **caractérisé en ce que** lesdits fils sont choisis parmi les fils capables de se répartir en filaments.

4. Procédé selon l'une des revendications 1 à 3, **caractérisé en ce que** les éléments sous forme de bandes (34, 47-55) sont disposés sur un tapis qui est disposé déplaçable sur une table de préparation de telle sorte à assurer un chevauchement partiel des fils ou filaments d'éléments adjacents dans une portion formée de la toile.

5. Procédé selon l'une des revendications précédentes, **caractérisé en ce qu'**à une première pluralité d'éléments sous forme de bandes (34, 47-55) agencés en chevauchements partiels sont superposés d'autres éléments sous forme de bandes, de telle sorte que leurs fils ou filaments (43-45) croisent les fils ou filaments desdits premiers éléments.

6. Procédé selon l'une des revendications précédentes, **caractérisé en ce que** lesdits éléments sous forme de bandes sont disposés en majorité selon la ou les direction(s) des efforts que la toile est destinée à subir.

7. Procédé selon l'une des revendications précédentes, **caractérisé en ce que** des éléments sous forme de bandes (34, 47-55) sont disposés en croisement sur d'autres éléments sous forme de bande aux endroits où la toile doit recevoir des renforcements particuliers.

8. Procédé de fabrication d'une toile formée et renforcée, selon l'une quelconque des revendications précédentes, **caractérisé par le fait qu'**il met en oeuvre une presse qui comporte une cuve supérieure (1) dont la partie inférieure est constituée par un premier élément souple (4), et une cuve inférieure (14) dont la partie supérieure est constituée par un deuxième élément souple (17), ledit premier élément souple (4) et ledit deuxième élément souple (17) étant disposés face à face pour presser une portion de ladite toile, la cuve supérieure (1) comportant une latte de formage (10), dont la forme peut être réglée par des tiges de réglages (7) en une position active dans laquelle la latte de formage (10) provoquent la déformation élastique en trois dimensions des éléments souples (4 et 17), et par conséquent la déformation de la portion de membrane qui se trouve dans la presse, et en une position non active dans laquelle la latte de formage (10) ne provoquent aucune déformation des éléments souples (4, 17), des éléments de renforcement et de la membrane qui est pressée à plat, que ces éléments sous forme de bande sont pressés à chaud de manière à constituer à la sortie de la presse une membrane qui comporte des portions plates et/ou des portions formées en trois dimensions selon des formes variables déterminées par le réglage la latte de formage lors du pressage de chaque portion de membrane et d'éléments de renforcement.

9. Procédé de fabrication selon la revendication 8, **caractérisé par le fait que** la cuves supérieure (1) de la presse est remplie d'air et la cuve inférieure (14) est remplie d'eau dont la pression est réglable et fournit la pression de pressage.

10. Procédé de fabrication selon l'une des revendications 2 à 9, **caractérisé par le fait que** l'activation, la polymérisation ou la fusion de la résine (42, 46) est obtenue par le chauffage de l'air ou de l'eau dans une cuve ou d'un élément flexible (4, 17) de la presse.

11. Procédé de fabrication selon l'une des revendications 2 à 9, **caractérisé par le fait qu'**une activation de la résine (42, 46) est obtenue par chauffage de la table de préparation (25) et que la polymérisation ou la fusion est obtenue par le chauffage de l'une ou l'autre des cuves (1, 14) de la presse.

12. Toile formée et renforcée obtenue par un procédé selon l'une quelconque des revendications précédentes comprenant une pluralité de groupes d'éléments de renforcement discontinus (34, 47-55) et une membrane (42, 46) formant une matrice qui enrobe lesdits éléments de renforcement, **caractérisée en ce que** la toile est réalisée en une pièce, que chaque groupe d'éléments de renforcement comprend une pluralité de fils ou de filaments (43-45) sensiblement parallèles, qu'un premier ensemble de groupes d'éléments de renforcement (44) est agencé de telle sorte que les fils ou filaments de ces groupes se chevauchent partiellement, et qu'un deuxième ensemble de groupes d'éléments de renforcement est agencé dans ladite matrice (45), de telle sorte que les fils ou filaments du deuxième ensemble croisent les fils ou filaments du premier ensemble.

13. Toile selon la revendication 12, **caractérisée en ce que** les directions desdits fils ou filaments sont déterminées majoritairement en fonction des directions des efforts que la toile est destinée à subir.

14. Voile constituée d'une seule pièce de toile selon l'une des revendications 12 à 13.

15. Voile selon la revendication 14, **caractérisée en ce que** les éléments sous forme de bandes (34, 47-55) sont disposés majoritairement en fonction des directions des efforts que la voile est destinée à subir.

16. Dispositif de mise en oeuvre d'un procédé selon l'une quelconque des revendications 1 à 11, **caractérisé en ce qu'**il comprend une presse qui comporte une cuve supérieure (1) dont la partie inférieure est constituée par un premier élément souple (4) et une cuve inférieure (14) dont la partie supérieure est constituée par un deuxième élément souple (17), lesdits premier et deuxième éléments souples (4, 17) étant agencés face à face, la cuve supérieure (1) comportant une latte de formage (10) dont la forme peut être réglée en une position active dans laquelle la latte provoque la déformation élastique en trois dimensions des éléments souples (4 et 17) et en une position non active dans laquelle la latte de formage ne provoque pas de déformation desdits éléments souples 4 et 17, et des moyens de chauffage permettant de chauffer l'un au moins desdits éléments souples.

17. Dispositif selon la revendication 16, **caractérisé en ce que** la forme de la latte de formage (10) est réglée au moyen d'une pluralité de tiges de réglage (7) exerçant des forces sensiblement perpendiculaires à ladite latte.

18. Dispositif selon l'une des revendications 16 ou 17, **caractérisé par le fait que** la presse comprend un élément de blocage (12) de la toile, qui est activé pendant chaque opération de pressage.

19. Dispositif selon l'une des revendications 16-18, **caractérisé par le fait que** la cuve supérieure (14) de la presse est remplie d'air dont la pression est réglable, la pression de pressage étant fournie par l'air comprimé contenu dans la cuve supérieure.

20. Dispositif selon la revendication 19, **caractérisé par le fait que** la cuve inférieure (1) est remplie d'eau dont le niveau est maintenu par une amenée (24) et une sortie d'eau (19) qui est reliée à un réservoir (20) et dont la pression est maintenue lors du pressage par la fermeture d'une vanne (58).

21. Dispositif selon l'une des revendications 6 à 20, **caractérisé en ce qu'**il comprend une bande de transport (29) capable de placer les éléments sous forme de bandes (34, 47-55) dans la presse.

22. Dispositif selon la revendication 21, **caractérisé en ce qu'**il comprend une table de préparation (25) agencée en amont de la presse, sous la bande de transport (29).

23. Dispositif selon la revendication 22, **caractérisé en ce que** des moyens de chauffage sont associés à la table de préparation (25).

## Claims

1. A method of manufacturing a shaped reinforced cloth, comprising discontinuous reinforcing elements (34, 47-55) and a membrane (42, 46) which encases the said reinforcing elements, **characterised in that** the cloth is produced as one piece by pressing successive portions, **in that**, in order to form portions of the cloth, a plurality of elements in strip form (34, 47-55), comprising materials of the reinforcing elements and the membrane, are arranged on a conveyor belt which is laid on a preparation table (25), so that each element in strip form overlaps partially with the adjacent elements in strip form, and **in that** the said plurality of elements in strip form is brought to and pressed portion by portion in a press provided with pressing means (7, 36-39) with an adjustable form, so as to form at the discharge from the press a cloth which comprises flat portions and/or portions shaped in three dimensions substantially according to the form which the said pressing means have when the corresponding portion is pressed.

2. A method according to claim 1, **characterised in that** the said elements in strip form (34, 47-55) comprise a plurality of unidirectional threads and/or reinforcing filaments (43-45), impregnated with a resin (42, 46).

3. A method according to claim 2, **characterised in that** the said threads are chosen from amongst threads capable of being split in filaments.

4. A method according to one of claims 1 to 3, **characterised in that** the elements in strip form (34, 47-55) are disposed on a belt which is disposed to move on a preparation table so as to provide partial overlap of the threads or filaments of adjacent elements in a shaped portion of the cloth.

5. A method according to one of the preceding claims, **characterised in that** onto a first plurality of elements in strip form (34, 47-55) arranged in partial overlaps, are superimposed other elements in strip form, so that their threads or filaments (43-45) cross the threads or filaments of the said first elements.

6. A method according to one of the preceding claims, **characterised in that** a majority of the said elements in strip form are disposed substantially according to the direction or directions of the forces which the cloth is intended to be subjected to.

7. A method according to one of the preceding claims, **characterised in that** elements in strip form (34, 47-55) are disposed so as to cross over other elements in strip form at the points where the cloth is to receive special reinforcings.

8. A method of manufacturing a shaped reinforced cloth, according to any one of the preceding claims, **characterised by** the fact that it uses a press which comprises an upper chamber (1) whose bottom part is formed by a first flexible element (4) and a lower chamber (14) whose top part is formed by a second flexible element (17), said first and second flexible elements (4, 17) facing one another for pressing a portion of said cloth, the upper chamber (1) comprising a forming bar (10) whose form can be adjusted by adjusting rods (7) in an active position in which the forming bar (10) causes elastic deformation in three dimensions of the flexible elements (4 and 17) and consequently deformation of the membrane portion which is situated in the press, and in a non-active position in which the forming bar (10) causes no deformation of the flexible elements (4, 17), of the reinforcing elements and of the membrane which is pressed flat, and that these elements in strip form are pressed hot so as to constitute at the discharge from the press a membrane which comprises flat portions and/or portions shaped in three dimensions according to variable shapes determined by the adjustment of the forming bar during the pressing of each membrane portion and reinforcing elements.

9. A manufacturing method according to claim 8, **characterised by** the fact that the press upper chamber is filled with air or water whose pressure is adjustable and provides the pressing pressure.

10. A manufacturing method according to one of claims 2 to 9, **characterised by** the fact that activation, polymerisation or fusion of the resin (42, 46) is obtained by heating of air or water in a press chamber, or a flexible element (4, 17) of the press.

11. A manufacturing method according to one of claims 2 to 9, **characterised by** the fact that activation of the resin (42, 46) is obtained by heating the preparation table (25) and that polymerisation or fusion is obtained by heating of at least one of the press chambers (1, 14).

12. A shaped reinforced cloth obtained by a method according to any one of the preceding claims comprising a plurality of groups of discontinuous reinforcing elements (34, 47-55) and a membrane (42, 46) forming a matrix which encases the said reinforcing elements, **characterised in that** the cloth is produced as one piece, **in that** each group of reinforcing elements comprises a plurality of substantially parallel threads or filaments (43, 45), **in that** a first set of groups of reinforcing elements (44) is arranged so that the threads or filaments in these groups partially overlap, and **in that** a second set of groups of reinforcing elements is arranged in the said matrix (45), so that the threads or filaments in the second set cross the threads or filaments of the first set.

13. A cloth according to claim 13, **characterised in that** the directions of the said threads or filaments are determined substantially according to the directions of the forces which the cloth is intended to be subjected to.

14. A sail shaped from a single piece of cloth according to any one of claims 12 to 13.

15. A sail according to claim 14, **characterised in that** a majority of the elements in strip form (34, 47-55) are disposed substantially according to the direction of the forces to which the sail is intended to be subjected.

16. A device for implementing a method according to any one of claims 1 to 11, **characterised in that** it comprises a press which comprises an upper chamber (1), whose bottom part is formed by a first flexible element (4), and a lower chamber (14) whose top part is formed by a second flexible element (17), said first and second flexible elements (4, 17) facing one another, the top chamber (1) comprising a forming bar (10) whose shape can be adjusted in an active position in which the bar causes an elastic deformation in three dimensions of the flexible elements (4 and 17) and in a non-active position in which the forming bar does not cause any deformation of the said flexible elements (4 and 17), and heating means for heating at least one of the said flexible elements.

17. A device according to claim 16, **characterised in that** the shape of the forming bar (10) is adjusted by means of a plurality of adjustment rods (7) exerting forces substantially perpendicular to the said bar.

18. A device according to one of claims 16 or 17, **characterised by** the fact that the press comprises a locking element (12) for locking the cloth, which is activated during each pressing operation.

19. A device according to one of claims 16 to 18, **characterised by** the fact that the upper chamber of the press (14) is filled with air whose pressure is adjustable, the pressing pressure being supplied by the compressed air contained in the upper chamber.

20. A device according to claim 19, **characterised by** the fact that the lower chamber (1) is filled with water whose level is maintained by a feed (24) and a water discharge (19), which is connected to a reservoir (20), and whose pressure is maintained during the pressing by the closure of a valve (58).

21. A device according to any one of claims 6 to 20, **characterised in that** it comprises a conveyor belt (29) capable of placing the elements in strip form (34, 47-55) into the press.

22. A device according to claim 21, **characterised in that** it comprises a preparation table (25) arranged upstream of the press, under the conveyor belt (29).

23. A device according to claim 22, **characterised in that** heating means are associated with the preparation table (25).

## Patentansprüche

1. Verfahren zur Herstellung eines geformten und verstärkten Stoffes, der unterbrochene Verstärkungselemente (34, 47-55) und eine Membran (42, 46) umfasst, die die Verstärkungselemente umgibt, **dadurch gekennzeichnet, dass** der Stoff in einem Stück durch Pressen von aufeinanderfolgenden Abschnitten gebildet wird, dass zur Bildung von Stoffabschnitten eine Vielzahl von Elementen in Form von Streifen (34, 47-55), die die Materialien der Verstärkungselemente und der Membran umfassen, auf einem Förderband angeordnet wird, das sich auf einem Vorbereitungstisch (25) befindet, derart, dass jedes streifenförmige Element teilweise überlappend mit den benachbarten streifenförmigen Elementen angeordnet ist, und dass die Vielzahl von streifenförmigen Elementen Abschnitt für Abschnitt einer Presse zugeführt wird und gepresst wird, wobei diese mit Pressmitteln mit einstellbarer Form (7, 36-39) versehen ist, so dass am Ausgang der Presse ein Stoff gebildet wird, der in Abhängigkeit von der Form, die die Pressmittel beim Pressen des entsprechenden Abschnitts aufweisen, flache und/oder dreidimensional geformte Abschnitte umfasst.

2. Verfahren nach Anspruch 1, **dadurch gekennzeichnet, dass** die streifenförmigen Elemente (34, 47-55) eine Vielzahl von Verstärkungsfäden oder -fasern (43-45) aufweisen, die einseitig gerichtet sind und mit einem Harz (42, 46) imprägniert sind.

3. Verfahren nach Anspruch 2, **dadurch gekennzeichnet, dass** die Fäden unter den Fäden gewählt sind, die in Fasern unterteilt werden können.

4. Verfahren nach einem der Ansprüche 1 bis 3, **dadurch gekennzeichnet, dass** die streifenförmigen Elemente (34, 47-55) auf einer Matte angeordnet sind, die beweglich auf einem Vorbereitungstisch angeordnet ist, so dass eine teilweise Überlappung der Fäden oder Fasern von benachbarten Elementen in einem geformten Abschnitt des Stoffes gewährleistet wird.

5. Verfahren nach einem der vorhergehenden Ansprüche, **dadurch gekennzeichnet, dass** über einer ersten Vielzahl von streifenförmigen Elementen (34, 47-55), die teilweise überlappend angeordnet sind, andere streifenförmige Elemente derart gelagert sind, dass ihre Fäden oder Fasern (43-45) die Fäden oder Fasern der ersten Elemente kreuzen.

6. Verfahren nach einem der vorhergehenden Ansprüche, **dadurch gekennzeichnet, dass** die streifenförmigen Elemente mehrheitlich in der oder den Richtung(en) der Kräfte angeordnet sind, denen der Stoff standhalten soll.

7. Verfahren nach einem der vorhergehenden Ansprüche, **dadurch gekennzeichnet, dass** die streifenförmigen Elemente (34, 47-55) an jenen Stellen, an denen der Stoff spezielle Verstärkungen erhalten soll, gekreuzt auf anderen streifenförmigen Elementen angeordnet sind

8. Verfahren zur Herstellung eines geformten und verstärkten Stoffes nach einem der vorhergehenden Ansprüche, **dadurch gekennzeichnet, dass** eine Presse verwendet wird, die Folgendes umfasst: eine obere Schale (1), deren unterer Teil durch ein erstes biegsames Element (4) gebildet wird, und eine untere Schale (14), deren oberer Teil durch ein zweites biegsames Element (17) gebildet wird, wobei das erste biegsame Element (4) und das zweite biegsame Element (17) einander gegenüberliegend angeordnet sind, um einen Abschnitt des Stoffes zu pressen, wobei die obere Schale (1) eine Formleiste (10) umfasst, deren Form durch Verstellspindeln (7) justiert werden kann, und zwar in eine aktive Position, in der die Formleiste (10) die dreidimensionale elastische Verformung der biegsamen Elemente (4 und 17) und in der Folge die Verformung des Membranabschnitts hervorruft, der sich in der Presse befindet, und in eine nicht aktive Position, in der die Formleiste (10) keine Verformung der biegsamen Elemente (4, 17), der Verstärkungselemente und der Membran hervorruft, die flachgepresst wird, und dass diese streifenförmigen Elemente heißgepresst werden, so dass sie am Ausgang der Presse eine Membran bilden, die in Abhängigkeit von den variablen Formen, die durch die Justierung der Formleiste beim Pressen jedes Membranabschnitts und der Verstärkungselemente festgelegt werden, flache und/oder dreidimensional geformte Abschnitte umfasst.

9. Herstellungsverfahren nach Anspruch 8, **dadurch gekennzeichnet, dass** die obere Schale (1) der Presse mit Luft gefüllt ist und die untere Schale (14) mit Wasser gefüllt ist, wobei der Druck einstellbar ist und den Pressdruck liefert.

10. Herstellungsverfahren nach einem der Ansprüche 2 bis 9, **dadurch gekennzeichnet, dass** die Aktivierung, die Polymerisierung oder das Schmelzen des Harzes (42, 46) durch die Erhitzung der Luft oder des Wassers in einer Schale oder eines biegsamen Elements (4, 17) der Presse erfolgt.

11. Herstellungsverfahren nach einem der Ansprüche 2 bis 9, **dadurch gekennzeichnet, dass** eine Aktivierung des Harzes (42, 46) durch die Erhitzung des Vorbereitungstisches (25) erfolgt und die Polymerisierung oder das Schmelzen durch die Erhitzung der einen oder anderen der Schalen (1, 14) der Presse erfolgt.

12. Geformter und verstärkter Stoff, der durch ein Verfahren nach einem der vorhergehenden Ansprüche hergestellt wird, umfassend eine Vielzahl von Gruppen von unterbrochenen Verstärkungselementen (34, 47-55) und eine Membran (42, 46), die eine Matrix bildet, die die Verstärkungselemente umgibt, **dadurch gekennzeichnet, dass** der Stoff in einem Stück gebildet wird, dass jede Gruppe von Verstärkungselementen eine Vielzahl von im Wesentlichen parallelen Fäden oder Fasern (43-45) umfasst, dass eine erste Einheit von Gruppen von Verstärkungselementen (44) derart angeordnet ist, dass sich die Fäden oder Fasern dieser Gruppen teilweise überlappen und dass eine zweite Einheit von Gruppen von Verstärkungselementen in der Matrix (45) derart angeordnet ist, dass die Fäden oder Fasern der zweiten Einheit die Fäden oder Fasern der ersten Einheit kreuzen.

13. Stoff nach Anspruch 12, **dadurch gekennzeichnet, dass** die Richtungen der Fäden oder Fasern mehrheitlich in Abhängigkeit von den Richtungen der Kräfte bestimmt werden, denen der Stoff standhalten soll.

14. Segeltuch, gebildet aus einem einzigen Stück Stoff nach einem der Ansprüche 12 bis 13.

15. Segeltuch nach Anspruch 14, **dadurch gekennzeichnet, dass** die streifenförmigen Elemente (34, 47-55) mehrheitlich in Abhängigkeit von den Richtungen der Kräfte angeordnet sind, denen das Segeltuch standhalten soll.

16. Vorrichtung zur Anwendung eines Verfahrens nach einem der Ansprüche 1 bis 11, **dadurch gekennzeichnet, dass** sie eine Presse umfasst, die Folgendes aufweist: eine obere Schale (1), deren unterer Teil durch ein erstes biegsames Element (4) gebildet wird, und eine untere Schale (14), deren oberer Teil durch ein zweites biegsames Element (17) gebildet wird, wobei das erste und zweite biegsame Element (4, 17) einander gegenüberliegend angeordnet sind, wobei die obere Schale (1) eine Formleiste (10) umfasst, deren Form justiert werden kann, und zwar in eine aktive Position, in der die Leiste die dreidimensionale elastische Verformung der biegsamen Elemente (4 und 17) hervorruft, und in eine nicht aktive Position, in der die Formleiste keine Verformung der biegsamen Elemente (4 und 17) hervorruft, und Erhitzungsmittel, die es ermöglichen, mindestens eines der biegsamen Elemente zu erhitzen.

17. Vorrichtung nach Anspruch 16, **dadurch gekennzeichnet, dass** die Form der Formlatte (10) mittels einer Vielzahl von Verstellspindeln (7) justiert wird, die Kräfte ausüben, die im Wesentlichen senkrecht zu der Leiste sind.

18. Vorrichtung nach einem der Ansprüche 16 oder 17, **dadurch gekennzeichnet, dass** die Presse ein Element zum Blockieren (12) des Stoffes umfasst, das während jedes Pressvorgangs aktiviert wird,

19. Vorrichtung nach einem der Ansprüche 16-18, **dadurch gekennzeichnet, dass** die obere Schale (14) der Presse mit Luft gefüllt ist, deren Druck einstellbar ist, wobei der Pressdruck von der Druckluft geliefert wird, die in der oberen Schale enthalten ist.

20. Vorrichtung nach Anspruch 19, **dadurch gekennzeichnet, dass** die untere Schale (1) mit Wasser gefüllt ist, dessen Pegel durch eine Zuleitung (24) und einen Wasserabfluss (19) aufrechterhalten wird, der mit einem Behälter (20) verbunden ist, und dessen Druck beim Pressen durch das Schließen eines Ventils (58) aufrechterhalten wird.

21. Vorrichtung nach einem der Ansprüche 16 bis 20, **dadurch gekennzeichnet, dass** sie ein Förderband (29) umfasst, das geeignet ist, die streifenförmigen Elemente (34, 47-55) in die Presse zu befördern.

22. Vorrichtung nach Anspruch 21, **dadurch gekennzeichnet, dass** sie einen Vorbereitungstisch (25) umfasst, der stromaufwärts von der Presse unter dem Förderband (29) angeordnet ist.

23. Vorrichtung nach Anspruch 22, **dadurch gekennzeichnet, dass** dem Vorbereitungstisch (25) Erhitzungsmittel zugeordnet sind.
